# EUROPEAN PATENT APPLICATION

(11) **EP 4 161 161 A1**
(43) Date of publication of application: **05.04.2023**
(21) Application number: 21200404.8
(22) Date of filing: 01.10.2021
(51) Int. Cl.: H04W 48/18, H04W 12/06, H04W 8/18

(54) **TECHNIQUES TO ENABLE EFFICIENT COMMUNICATION ESTABLISHMENT OF A USER DEVICE IN A ROAMING USE CASE**

(71) Applicant: Deutsche Telekom AG, 53113 Bonn (DE)
(72) Inventor: Melander, Mari, 53225 Bonn (DE)
(74) Representative: Braun-Dullaeus Pannen Emmerling Patent- & Rechtsanwaltspartnerschaft mbB

(57) **Abstract**

Techniques to enable efficient communication establishment of a user device to a network in which an identifier associated to the user device is hosted, comprising the following steps:
• Providing to a first network a list of identifiers by a second network, wherein the list enumerates identifiers that are assigned to the second network but which are hosted by a third network;
• The first network receives a communication request from a user device requesting connectivity to the second network;
• The first network extracts an identifier associated to the user device and compares the extracted identifier with the list of identifiers and directs the communication request of the user device to the third network if the identifier associated to the user device is part of the list of identifiers.

## Description

The invention relates to techniques to enable efficient communication establishment of a user device in a roaming use case. In particular, the invention relates to a method, a network entity, a further network entity and communication system to enable efficient communication establishment of the user device in a roaming use case.

When establishing communication connections within networks of one network provider and/or across different network providers it is important to direct a communication to the correct endpoint. This is for example very obvious if a first person tries to establish a telephone call with a second person. Roaming situations, i.e. when a starting point of the communication and an endpoint of the communication are located within different communication networks, can make this communication establishment even more complicated. A typical roaming situation is that a user has no access to his home network and tries to access his home network to run a service via a visited network in which he has communication access. The visited network then directs the communication from the visited network to the home network.

To facilitate this directing to the home network, in each communication request of a user device there is a unique identifier associated to it, wherein the unique identifier comprises an information about the network to which the unique identifier is assigned, which typically is the home network of the network provider. The identifier associated to the user device as described above is not an identifier of the user device itself like an IMEI but an identifier like an IMSI that identifies the subscription profile and can be stored on an eSIM. In other words, every network provider possesses a certain range of identifiers and every communication request of a user device having an identifier within this range will be directed to this very network.

However, it can happen, for example due to agreements between a network provider and another network provider and/or a company, that a subset of the range of identifiers that the network provider possesses shall not be directed to the home network of this network provider but to a different network, also called a third network, that is run by the other network provider and/or a company. In the context of this invention, this means that this subset of identifiers is hosted by the different network.

Especially in roaming situations this redirection causes problems, because if the visited network reads out the information of the identifier, it determines that it shall direct the communication to the home network and not to third network. For example, if the unique identifier is a so called IMSI: Examples of an IMSI: 262 01 9876543210: MCC 262 for Germany, MNC 01 for Telekom Deutschland, MSIN 9876543210 for the subscriber.

For 5G Stand Alone (SA) roaming it will be necessary to support IMSI/SUPI hosting scenarios, where the IMSI/SUPI belongs to one network, but is hosted in a different network. In legacy networks, e.g. 4G, such rerouting could be performed by entities interconnecting the networks (IPX), because the signaling is not encrypted. In 5G SA roaming, however, the connection is established between visited networks SEPP and home network SEPP and the signaling between VPLMN SEPP and HPLMN SEPP is encrypted, therefore any entity in between cannot execute rerouting of the signaling traffic. HPLMN means "Home Public Land Mobile Network", VPLMN means "Visited Public Land Mobile Network", and SEPP means "Security Edge Protection Proxy".

Hence, it is the task of the invention to provide efficient techniques to direct a communication, in particular a communication request in a flexible way to the network that hosts an identifier.

This object is solved by the features of the independent claims.

The features of the various aspects of the invention described below or the various examples of implementation may be combined with each other, unless this is explicitly excluded or is technically impossible.

In the following text passages, the invention is mainly described within the context of a user device to which the identifier is associated, i.e. the identifier identifies a subscription profile linked to the user device. The identifier can be stored in an eSIM of the user device. In general, this user device can be any device that is capable of connecting to a communication network. Examples are computers, smart phones, IOT devices, cars, etc.

According to a first aspect of the invention, a method is provided to enable efficient communication establishment of a user device to a network in which an identifier associated to the user device is hosted, comprising the following steps:
- Providing to a first network a list of identifiers by a second network, wherein the list enumerates identifiers that are assigned to the second network, but which are hosted by a third network;
   ∘ in particular, the identifiers are unique identifiers and comprise information about the network of the network provider to which they "belong". So typically their requests for communication or certain services are directed to the network to which they are assigned and are executed on entities within that network; the network can comprise different servers to fulfill those tasks. Typically, the identifiers are hosted within the network to which they are assigned. However, as explained above, the invention describes a situation in which the identifiers are assigned to a network but they are actually hosted by a different network, namely the third network. In that sense, the assignment to a network is related to the information that can be extracted from the identifier, wherein the hosting is related to a network in which the services requested by the user device are actually executed. The user device can be equipped with a SIM or an eSIM card that stores the information about the identifier.
   ∘ The provided list of identifiers can also be a range of identifiers.
- The first network receives a communication request from a user device to the second network;
   ∘ the communication request shall be understood technically in a broad way so that it can also be a service request of any kind that shall be executed on servers within the network;
   ∘ the request is directed to the second network because the information stored within the unique identifier carried by the user device specifies the second network as the network to which the identifier is assigned to;
- The first network extracts an identifier associated to the user device, in particular associated to the request, and compares the extracted identifier with the list of identifiers and directs the communication request of the user device to the third network if the identifier associated to the user device is part of the list of identifiers.
   ∘ The third network can be hosted by a service provider, in particular by a third service provider.

This provides the advantage that, especially in roaming situations, the first network does not direct the request to the second network as it would normally do based on the information extracted from the unique identifier, but to a different network, namely the third network, that actually is executing services related to the identifier associated to the user device. This greatly reduces signaling traffic, in particular within the second network, which would otherwise receive the request and first needs to evaluate that the identifier is not hosted by the second network and then has to generate and send an answer to the first network to redirect the request to the third network instead. Another advantage is that providing this list of identifiers to the first network, the related information can be taken into account before the first network is performing an encryption which has the effect that any "redirecting" entity between networks will not be able to read and/or redirect the communication request. A further advantage is that this an efficient way of directing a request reduces latency effects within the communication. For example, with respect to autonomous driving, it is expected, that it is important to reduce latency as far as possible. Providing the list or the range of multiple identifiers provides the advantage that a request of a user device that is associated to one of the identifiers of the list can be directed to the correct network, in particular the third network, even if this user device requests communication within the first network for the first time.

In an embodiment, the list of identifiers comprises information about the third network. In particular, the information about the third network comprises information that can be extracted by the first network to direct the request to the third network. For example, the information can be a name and/or a destination, like an IP address and/or a URL and/or an FQDN of the SEPP, of the third network. A possible embodiment of the list is a table, wherein each identifier is listed in a row and additional information related to this identifier are listed in further columns. So it is possible to list an expiration time and/or the third network and/or other information in the respective columns for each identifier individually.

This provides the advantage that the first network can efficiently direct the request to the third network without the need to ask for further information. This again reduces signaling traffic.

In an embodiment, the list or the range of identifiers is provided by a service provider of the second network to a service provider of the first network.

This provides the advantage that only the service provider of the second network has the authority to specify which of the identifiers he possesses are actually hosted by a different network provider who runs the different network.

Hence, there are certain security measures implemented regarding an authorization of the communication between different service providers so that they can verify which service provider actually sent the list of identifiers. This greatly limits the possibility of misuse.

In an embodiment, the list of identifiers is provided from the second network to the first network upon receiving the communication request.

This provides the advantage of making the method more efficient because the second network provider does not know in advance to which of the many "first network" providers it shall send the list of identifiers. In that sense, the communication request leading to the providing of the list of identifiers can be a first communication request. It tells the second network provider that there is a distinct network provider out of many possible network providers that actually obtained a service request of an identifier that is not hosted by the second network provider. Of course, the second network provider could send the list to all possible roaming partners but this would cause a large amount of data traffic.

In an embodiment, the list of identifiers comprises expiration information about at least one of the identifiers.

This has the advantage that the second network provider can make a subset of his identifiers available to a third service provider not permanently, but only for a certain period of time. For example, the expiration information can comprise information that a certain identifier is hosted by the third network for a predefined period of time and/or for a predefined number of requests. To reduce the size of the list, an entry of identifier can be deleted after it has expired.

In an embodiment, the first network provider replaces the list of identifiers if the second network provider transmits a new list of identifiers.

This provides the advantage that the list of identifiers can be kept actual and represents the current situation of the identifiers regarding to which network actually hosts these identifiers.

In an embodiment, the first network is a VPLMN and the second network is a HPLMN, wherein the identifier associated to the user device belongs to the HPLMN.

This provides the advantage that communication requests in roaming scenarios can be efficiently directed to the network that actually hosts the services requested by the user device.

In an embodiment, the first network and the second network are 5G networks, in particular 5G core networks. The third network can also be a 5G Network.

This provides the advantage that the invention makes it possible to redirect communication requests efficiently within 5G networks which was previously not possible due to the encryption mechanisms that take place in the control plane of 5G networks when establishing a communication.

In an embodiment, the steps of the methods are executed by a SEPP of the respective network, in particular by a HPLMN SEPP and a VPLMN SEPP. In particular, the VPLMN SEPP does the extraction of identifiers of the user device, comparing the extracted identifier with the list of identifiers and/or directing the communication request of the user device to the third network if the identifier associated to the user device is part of the list of identifiers.

This provides the advantage that the invention makes use of the entity of the network that has the task to direct the communication request to the appropriate network. If the VPLMN SEPP also performs the extracting and comparing steps, this avoids additional signaling traffic within the first network. Since the SEPPs are at the outer border of each of the networks, they are especially suited for this task. A SEPP is a "Security Edge Protection Proxy" that authenticates and encrypts control plane traffic and sends it to a network of a roaming partner.

In an embodiment, the list of identifiers is stored within a database of the VPLMN SEPP.

In this way, the list of identifiers can be made permanently available for evaluation in an efficient manner.

In an embodiment, the list of identifiers of user devices is provided during a N32-c setup.

The N32-c is the Control Plane interface between the SEPPs of the VPLMN and the HPLMN for performing the initial handshake and negotiating the parameters to be applied for the actual N32 message forwarding, (see for example section 4.2.2 of 3GPP TS 29.573) Because the providing of the identifiers can be done during the initial handshake, it is done at a very early stage which makes this feature very efficient because unnecessary computational load is avoided. It can be compared to the situation that it is best to tell a person as soon as possible that he took a wrong route when navigating with his car.

The N32-c is independent from any identifier, e.g. IMSI/SUPI. The list or range of the identifiers can be included in one of the messages during the N32-c connection setup or it can be provided by a separate message. The list or the range of identifiers can be a new HTTP header, or a new information element in the HTTP body, which is a JSON object. In particular, the VPLMN SEPP receives the list of identifiers with the URL of the third SEPP. The VPLMN SEPP stores this range, and for further connections for subscribers from this range, it would directly connect the alternative SEPP, wherein the alternative SEPP is the SEPP of the third network. The expiration time of the identifiers can also be carried in the HTTP response.

In an embodiment, the list of identifiers is provided during a N32-f setup.

The N32-f is the Forwarding interface between the SEPPs, that is used for forwarding the communication between the Network Function (NF) service consumer and the NF service producer after applying the application level security protection. (see section 4.2.3 of 3GPP TS 29.573)

The range of identifiers can be sent during the N32-f setup, e.g. in HTTP 300 redirect response to a HTTP request for a particular identifier, in particular a IMSI/SUPI. The identifier range could be a new HTTP header, or a new information element in the HTTP body, which is a JSON object. The VPLMN SEPP can receive the identifier IMSI/SUPI range with the URL of the alternative SEPP. The VPLMN SEPP stores this range, and for further connections for subscribers from this range, it can directly connect the SEPP of the third network. The expiration time of the identifiers range could be also carried in the HTTP response.

In an embodiment, identifiers are IMSI and/or SUPI identifiers.

This provides the advantage of making use of identifiers that are currently used in communication networks. As a consequence, the use of existing identifiers reduces the need for adaption of protocols within the communication networks.

The international mobile subscriber identity (IMSI) is a number that uniquely identifies every user of a cellular network. It is stored as a 64-bit field and is sent by the mobile device to the network. It is also used for acquiring other details of the mobile in the home location register (HLR) or as locally copied in the visitor location register. IMSI analysis is the process of examining a subscriber's IMSI to identify the network the IMSI belongs to, and whether subscribers from that network may use a given network (if they are not local subscribers, this requires a roaming agreement).

Subscription Permanent Identifier (SUPI): A SUPI is a 5G globally unique Subscription Permanent Identifier (SUPI) allocated to each subscriber and defined in 3GPP specification TS 23.501. The SUPI value is provisioned in USIM and UDM/UDR function in 5G Core. A SUPI is usually a string of 15 decimal digits. The first three digits represent the Mobile Country Code (MCC) while the next two or three form the Mobile Network Code (MNC) identifying the network operator. The remaining (nine or ten) digits are known as Mobile Subscriber Identification Number (MSIN) and represent the individual user of that particular operator. SUPI is equivalent to IMSI which uniquely identifies the ME, is also a string of 15 digits.

According to a second aspect of the invention, a network entity of a second network, in particular a HPLMN SEPP, is provided that is configured to provide a list of identifiers to a network entity, in particular a VPLMN SEPP, of a first network, wherein the list enumerates identifiers that are assigned to the second network but which are hosted by a third network.

The network entity is configured to perform the steps described above in the context of the method that are technically associated to the network entity.

According to a third aspect of the invention, a further network entity of a first network, in particular a VPLMN SEPP, is provided that is configured to receive a list of identifiers by a second network, wherein the list enumerates identifiers that are assigned to the second network but which are hosted by a third network, wherein the further network entity is configured to extract an identifier of a communication request of user device and to compare the extracted identifier with the list of identifiers and to direct the communication request of the user device to the third network if the identifier associated to the user device is part of the list of identifiers.

The further network entity is configured to perform the steps described above in the context of the method that are technically associated to the further network entity.

According to a fourth aspect of the invention, a communication system is provided that is configured to perform the steps of the method described above.

In particular, the communication system comprises of the first network, of the second network, the third network, the network entity, the further network entity and communication means that connect the different networks. In particular, the communication system is a 5G communication systems. The inventive communication system provides advantages analog to the methods described above.

In the following, preferred implementation examples of the present invention are explained with reference to the accompanying figure:
- Fig. 1:: shows a generic 5G core network roaming architecture with its build-in signaling security features.
- Fig. 2:: shows a communication system and a method according to the invention.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

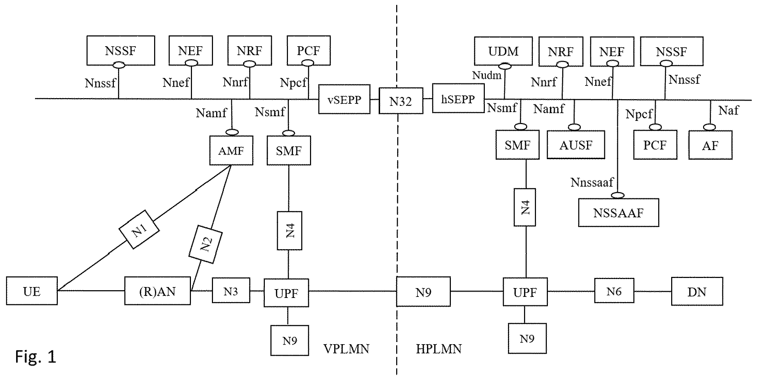

Fig. 1 shows a generic 5G core network roaming architecture with its build-in signaling security features: The above-mentioned in-built security mechanisms for 5G roaming are sufficient in a pure 5G roaming scenario when a 5G user is registered in a visited 5G public land mobile network (VPLMN) and establishes data connections back to the home public land mobile network (HPLMN). Such a scenario is referred to as "outbound roaming in a visited 5G network".

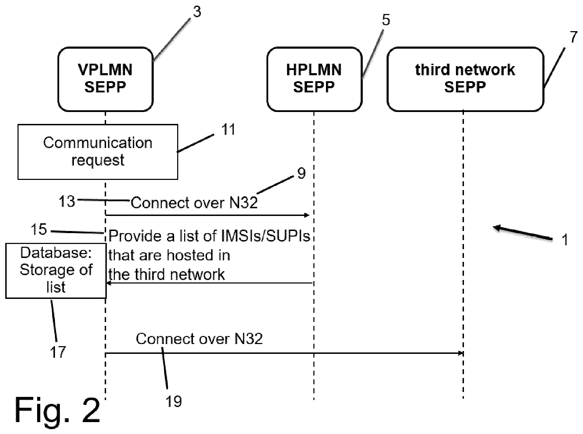

Fig. 2 shows a 5G communication system 1 and a method according to the invention.

The communication system 1 comprises a VPLMN SEPP 3, a HPLMN SEPP 5, a third network SEPP 7 and N32 interfaces 9 to connect the SEPPs 3, 5, 7 with each other. The SEPPs 3, 5, 7 lie at the "border" of the respective 5G core networks of the VPLMN, HPLMN and the third network. Any control plane traffic needs to pass the respective SEPPS 3, 5, 7 to get to the 5G core networks.

In step 11 a HPLMN subscriber requires connectivity within the VPLMN with his user device.

In step 13, the VPLMN SEPP 3 connects to the HPLMN SEPP 5 over the N32 interface 9. At this stage of the procedure, the VPLMN SEPP 3 has no knowledge about possible IMSI/SUPI ranges of the HPLMN network that are hosted by a third network.

In step 15, the HPLMN SEPP 5 can decrypt the communication request 11 and extract the IMSI/SUPI, which is associated to the communication request 11. If the IMSI/SUPI is not hosted by the HPLMN, then the request needs to re-directed to the network that actually hosts the respective IMSI/SUPI, namely to the third network.

Since the HPLMN knows which of its IMSIs/SUPIs are hosted by another network, in particular the third network, the service provider of the HPLMN can generate a list of the IMSIs/SUPIs hosted by the third network. The HPLMN then answers the communication request 11 by providing a list of IMSIs/SUPIs that are hosted in the third network to the VPLMN SEPP 3.

In step 17, the VPLMN SEPP 3 can store this list in its database.

In step 19, the VPLMN SEPP 3 redirects the communication request 11 to the third network SEPP 7 so that the request can be executed within the third network.

If the list of IMSIs/SUPIs is already stored in the database of the VPLMN SEPP 3 when the VPLMN SEPP 3 receives the communication request 11, then the steps 13, 15 can be skipped and the VPLMN SEPP 3 can analyze and to determine without further information to redirect the communication request 11 directly to the third network SEPP 7 if the IMSI/SUPI is part of the list. This especially greatly reduces signaling traffic between the networks.

## Claims

1. A method to enable efficient communication establishment of a user device to a network in which an identifier associated to the user device is hosted, comprising the following steps:
• Providing to a first network (3) a list of identifiers by a second network (5), wherein the list enumerates identifiers that are assigned to the second network but which are hosted by a third network (7);
• The first network receives a communication request (11) from a user device requesting connectivity to the second network (5);
• The first network (3) extracts an identifier associated to the user device and compares the extracted identifier with the list of identifiers and directs the communication request of the user device to the third network (7) if the identifier associated to the user device is part of the list of identifiers.

2. The method of claim 1, wherein the list of identifiers comprises information about the third network.

3. The method of any of the claims, wherein the list of identifiers is provided by a service provider of the second network to a service provider of the first network.

4. The method of any of the claims, wherein the list of identifiers is provided from the second network to the first network upon receiving the communication request.

5. The method of any of the claims, wherein the list of identifiers comprises expiration information about at least one of the identifiers.

6. The method of any of the claims, wherein the first network is a VPLMN and the second network is a HPLMN, wherein the identifier associated to the user device belongs to the HPLMN.

7. The method of any of the claims, wherein the first network and the second network are 5G networks.

8. The method of claim 7, wherein the steps of the methods are executed by a SEPP of the respective network, in particular by a HPLMN SEPP and a VPLMN SEPP.

9. The method of claim 8, wherein the list of identifiers is stored within a database of the VPLMN SEPP.

10. The method of any of the claims 7 to 9, wherein the list of identifiers is provided during a N32-c setup.

11. The method of claim claims 7 to 10, wherein the list of identifiers is provided during a N32-f setup.

12. The method of any of the claims, wherein the identifiers are IMSI and/or SUPI identifiers.

13. A network entity of a second network, in particular a HPLMN SEPP, configured to provide a list of identifiers to a network entity, in particular a VPLMN SEPP, of a first network, wherein the list enumerates identifiers that are assigned to the second network but which are hosted by a third network.

14. A further network entity of a first network, in particular a VPLMN SEPP, configured to receive a list of identifiers by a second network, wherein the list enumerates identifiers that are assigned to the second network but which are hosted by a third network, wherein the further network entity is configured to extract an identifier from a communication request of user device and to compare the extracted identifier with the list of identifiers and to direct the communication request of the user device to the third network if the identifier associated to the user device is part of the list of identifiers.

15. A communication system configured to perform the steps of the method of any of the claims 1-12.
